# EUROPEAN PATENT APPLICATION

(11) **EP 4 109 716 A1**
(43) Date of publication of application: **28.12.2022**
(21) Application number: 21868233.4
(22) Date of filing: 08.07.2021
(51) Int. Cl.: H02K 1/14, H02K 1/16

(54) **L-SHAPED STATOR CORE STRUCTURE OF PERMANENT MAGNET SYNCHRONOUS FRAMELESS MOTOR**

(30) Priority: 21.09.2020 CN 202011000190
(71) Applicant: Aides Automotive Motor Wuxi Co., Ltd., Wuxi, Jiangsu 214000 (CN)
(72) Inventor: YOU, Weijian, Wuxi, Jiangsu 214000 (CN)
(74) Representative: Kolster Oy Ab
(86) International application number: PCT/CN2021/105200
(87) International publication number: WO 2022/057404

(57) **Abstract**

The present disclosure provides an L-shaped stator core structure of a permanent magnet synchronous frameless motor, which includes a plurality of core units arranged annularly. Each of the core units includes an outer ring edge, an inner tooth shoe, and a center column between the outer ring edge and the inner tooth shoe. The inner tooth shoe, the center column, and the outer ring edge form an L-shaped core unit from top to bottom. A positioning groove and a positioning projection which are matched with each other are arranged on the outer ring edge of the L-shaped core unit. The plurality of core units are connected by the positioning grooves and the positioning projections and arranged annularly. The L-shaped stator core structure of the permanent magnet synchronous frameless motor according to the present disclosure facilitates the assembly of a pre-formed winding and the assembly of a flat wire vertical coil winding structure having a relatively good performance, which is suitable for the production and manufacturing of micro and small motors, thereby meeting the requirements of the micro and small motors for the high slot fill factor, ensuring uniform inductance and resistance of windings assembled on the center columns, and ensuring the consistency of the windings on the stator core structure.

## Description

### TECHNICAL FIELD

The present disclosure relates to the technical field of motor structures, and particularly to an L-shaped stator core structure of a permanent magnet synchronous frameless motor.

### BACKGROUND

With the gradual development of Industry 4.0 in China's industrial field, the demand for joint motors and high-precision servo motors of collaborative robots is increasing. The development of the core component of these motors, frameless motor technology, fails to come up with the demand. The development of high-precision frameless motors, especially joint motors of collaborative robots related to integrated circuit chips, has always been hampered by technical bottlenecks, and no substantial breakthroughs have been made. In order to change this situation, those skilled in the art have continuously deepened the research and exploration of high-precision frameless motor technology. There are already a variety of series of high-precision frameless motor products in the prior art. However, the existing high-precision frameless motor products generally have the shortcomings of low slot fill factor and poor electromagnetic properties. Moreover, the existing high-precision frameless motor products generally use an I-shaped (or T-shaped) stator core structure. The assembly process for a coil winding of a small or micro motor with a diameter of 150 mm or less is relatively complicated. The coil formed by winding of an enameled round wire in the prior art has poor manufacturability, low production efficiency, relatively high defect rate, and very high requirements for equipment. However, when the I-shaped (or T-shaped) stator core structure is assembled with a flat wire vertical coil winding structure having a relatively good performance, the presence of the tooth shoe and the outer ring edge makes it difficult to assemble the winding onto the center column between the tooth shoe and the outer ring edge of the stator core.

### SUMMARY

In view of the deficiencies in the prior art, the present disclosure provides an L-shaped stator core structure of a permanent magnet synchronous frameless motor, which facilitates the assembly of a coil winding.

To solve the above technical problems, the following technical solutions are employed in the present disclosure.

The present disclosure provides an L-shaped stator core structure of a permanent magnet synchronous frameless motor, including a plurality of core units arranged annularly. Each of the core units includes an outer ring edge, an inner tooth shoe, and a center column between the outer ring edge and the inner tooth shoe. The inner tooth shoe, the center column, and the outer ring edge form an L-shaped core unit from top to bottom. A positioning groove and a positioning projection which are matched with each other are arranged on the outer ring edge of the L-shaped core unit. The plurality of core units are connected by the positioning grooves and the positioning projections and arranged annularly.

Further, an outer side surface of the outer ring edge is curved in an arc shape, so that outer peripheral sides of the stator core structure after the plurality of core units are arranged annularly are on a circumference of an identical circle.

Further, the positioning groove is arranged on a first end of the outer ring edge, and the positioning projection is arranged on a second end of the outer ring edge.

Further, the positioning projection is arranged on an outer end of the outer ring edge of the L-shaped core unit, and the positioning groove is arranged on an end of the outer ring edge which is connected to the center column.

Further, an inner side surface of the inner tooth shoe is curved in an arc shape, so that inner peripheral sides of the stator core structure after the plurality of core units are arranged annularly are on a circumference of an identical circle.

Further, a wiring cavity is formed between two adjacent ones of the center columns.

Compared with the prior art, the present disclosure has the following beneficial effects.

The L-shaped stator core structure of the permanent magnet synchronous frameless motor according to the present disclosure facilitates the assembly of a pre-formed winding and the assembly of a flat wire vertical coil winding structure having a relatively good performance, which is suitable for the production and manufacturing of micro and small motors, thereby meeting the requirements of the micro and small motors for the high slot fill factor, ensuring uniform inductance and resistance of windings assembled on the center columns, and ensuring the consistency of the windings on the stator core structure.

### BRIEF DESCRIPTION OF THE DRAWINGS

FIG. 1 is a schematic structural cross-sectional view of a stator core structure according to the present disclosure.
FIG. 2 is a schematic structural view of a core unit according to the present disclosure.
FIG. 3 is a structural view of a core unit assembled with a flat wire vertical coil winding.
FIG. 4 is a structural bottom view of part S in FIG. 3.

In the drawings: 1 - core unit, 11 - outer ring edge, 12 - center column, 13 - inner tooth shoe, 14 - positioning groove, 15 - positioning projection, 2 - flat wire vertical coil winding, 21 - incoming/outgoing end, 3 - wiring cavity.

### DETAILED DESCRIPTION OF THE EMBODIMENTS

The present disclosure will be further described in detail with reference to the accompanying drawings, but the protection scope of the present disclosure is not limited to the following embodiments. Any equivalent changes made by those skilled in the art under the teachings of the present disclosure shall fall within the protection scope of the present disclosure.

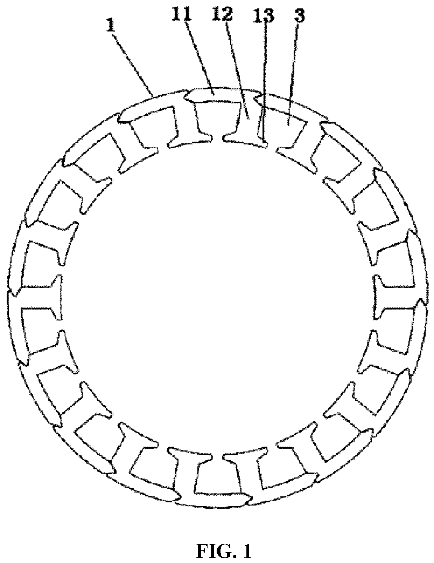

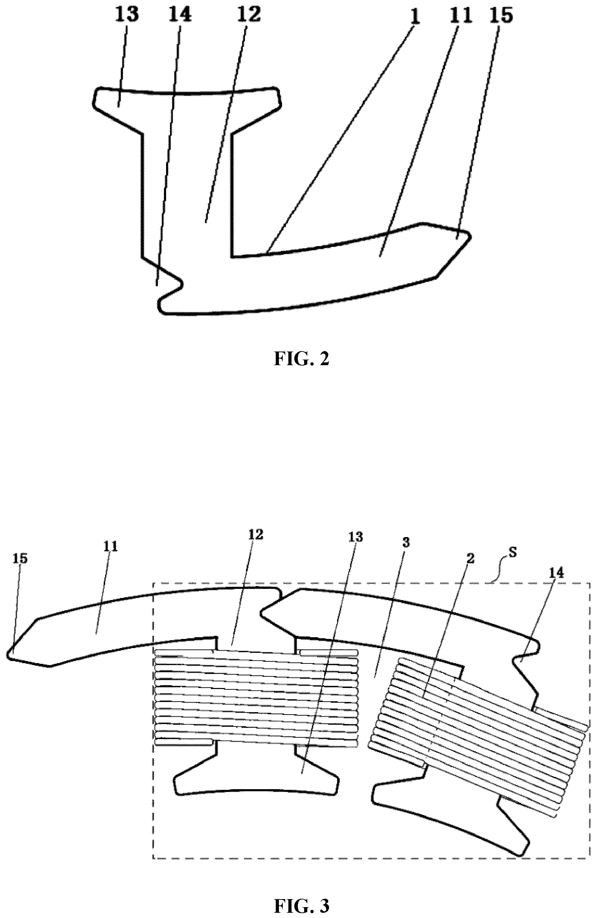

As shown in FIG. 1 and FIG. 2, an embodiment of the present disclosure provides an L-shaped stator core structure of a permanent magnet synchronous frameless motor, including a plurality of core units 1 arranged annularly. Each of the core units 1 includes an outer ring edge 11, an inner tooth shoe 13, and a center column 12 between the outer ring edge 11 and the inner tooth shoe 13. The inner tooth shoe 13, the center column 12, and the outer ring edge 11 form an L-shaped core unit 1 from top to bottom. A positioning groove 14 and a positioning projection 15 which are matched with each other are arranged on the outer ring edge 11 of the L-shaped core unit 1. The plurality of core units 1 are connected by the positioning grooves 14 and the positioning projections 15 and arranged annularly. Dimensions of the stator core structure in this embodiment shown in FIG. 1 include: an outer radius (a distance from a center of a cross-sectional circle to an outer peripheral side of the outer ring edge) being 34.50 mm, an inner radius (a distance from the center of the cross-sectional circle to an inner peripheral side of the inner tooth shoe) being 25.80 mm, and a distance from the center of the cross-sectional circle to an inner peripheral side of the outer ring edge being 32.30 mm. In other embodiments, the dimensions of the stator core structure may also be changed to other dimensions by proportionally changing the dimensions as shown in FIG. 1, changing the length of the center column 12, or reducing or increasing the number of the core units 1.

Further, an outer side surface of the outer ring edge 11 is curved in an arc shape, so that outer peripheral sides of the stator core structure after the plurality of core units 1 are arranged annularly are on a circumference of an identical circle.

Further, the positioning groove 14 is arranged on a first end of the outer ring edge 11, and the positioning projection 15 is arranged on a second end of the outer ring edge 11. The positioning groove 14 of each of the core units 1 is engaged with the positioning projection 15 of an adjacent one of the core units 1, so that the plurality of core units 1 are arranged annularly into a stator core structure having a ring-shaped cross-section.

Further, the positioning projection 15 is arranged on an outer end of the outer ring edge 11 of the L-shaped core unit 1, and the positioning groove 14 is arranged on an end of the outer ring edge 11 which is connected to the center column 12.

Further, an inner side surface of the inner tooth shoe 13 is curved in an arc shape, so that inner peripheral sides of the stator core structure after the plurality of core units 1 are arranged annularly are on a circumference of an identical circle.

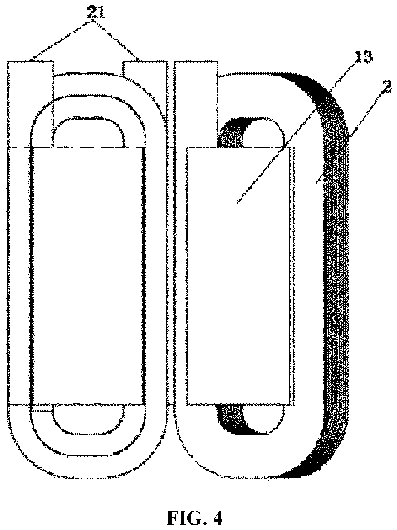

Further, a wiring cavity 3 is formed between two adjacent ones of the center columns 12. During the assembly of a flat wire vertical coil winding 2, the flat wire vertical coil winding 2 is sleeved over the outer end of the outer ring edge 11 of the L-shaped core unit 1, and then moved along the outer ring edge 11 to the center column 12, thereby completing the assembly of the flat wire vertical coil winding 2. The structures of the flat wire vertical coil winding 2 and the core unit 1 assembled with the flat wire vertical coil winding 2 are shown in FIG. 3 and FIG. 4. An enameled flat wire with a thickness of 0.5 mm or less is wound into stator slots through a lead-in process to produce the flat wire vertical coil winding 2. It is ensured that the length and size of the enameled wire of each coil are consistent. Incoming/outgoing ends 21 of flat wire vertical coil windings 2 on different coil windings are connected to each other. The flat wire vertical coil winding 2 is a vertical winding formed by winding an enameled flat wire. The vertical winding is sleeved over an outer part of the center column 12 to form a coil winding unit. A plurality of coil winding units are arranged annularly between a permanent magnet rotor and a stator. A plurality of permanent magnets are fixedly connected to an outer part of the permanent magnet rotor, so that the frameless motor can use the different magnetization directions of the magnetic steels to rebuild the magnetic path between the magnetic steels, thereby achieving the generation of a torque by a silicon-free steel rotor. The L-shaped stator core structure of the permanent magnet synchronous frameless motor according to the present disclosure facilitates the assembly of a pre-formed winding structure such as the flat wire vertical coil winding 2, and is very suitable for the fabrication of small and micro motors, and helps improve the slot fill factor of the motor. In addition, with the assembly of the pre-formed winding structure such as the flat wire vertical coil winding 2, all the windings in the coil winding structure of the permanent magnet synchronous frameless motor can be of the same length, and the coil windings can be of the same shape. That is, uniform inductance and resistance of the windings assembled on the center columns 12 can be achieved, thereby ensuring the consistency of the windings.

## Claims

1. An L-shaped stator core structure of a permanent magnet synchronous frameless motor, comprising a plurality of core units arranged annularly, wherein each of the core units comprises an outer ring edge, an inner tooth shoe, and a center column between the outer ring edge and the inner tooth shoe; the inner tooth shoe, the center column, and the outer ring edge form an L-shaped core unit from top to bottom; a positioning groove and a positioning projection which are matched with each other are arranged on the outer ring edge of the L-shaped core unit; and the plurality of core units are connected by the positioning grooves and the positioning projections and arranged annularly.

2. The L-shaped stator core structure of the permanent magnet synchronous frameless motor according to claim 1, wherein an outer side surface of the outer ring edge is curved in an arc shape, so that outer peripheral sides of the stator core structure after the plurality of core units are arranged annularly are on a circumference of an identical circle.

3. The L-shaped stator core structure of the permanent magnet synchronous frameless motor according to claim 1 or 2, wherein the positioning groove is arranged on a first end of the outer ring edge, and the positioning projection is arranged on a second end of the outer ring edge.

4. The L-shaped stator core structure of the permanent magnet synchronous frameless motor according to claim 3, wherein the positioning projection is arranged on an outer end of the outer ring edge of the L-shaped core unit, and the positioning groove is arranged on an end of the outer ring edge which is connected to the center column.

5. The L-shaped stator core structure of the permanent magnet synchronous frameless motor according to claim 1, wherein an inner side surface of the inner tooth shoe is curved in an arc shape, so that inner peripheral sides of the stator core structure after the plurality of core units are arranged annularly are on a circumference of an identical circle.

6. The L-shaped stator core structure of the permanent magnet synchronous frameless motor according to claim 1, wherein a wiring cavity is formed between two adjacent ones of the center columns.
